# EUROPEAN PATENT SPECIFICATION

(11) **EP 1 230 404 B1**
(45) Date of publication and mention of the grant of the patent: **17.12.2003**
(21) Application number: 00970328.1
(22) Date of filing: 18.10.2000
(51) Int. Cl.: C21C 5/52, C21C 5/54

(54) **METHOD AND USE OF CALCIUM NITRATE FOR FOAMING OF STEEL-MAKING SLAGS**
VERFAHREN UND GEBRAUCH VON KALZIUMNITRATEN ZUM AUFSCHÄUMEN VON STAHLSCHLACKEN
PROCEDE ET UTILISATION DE NITRATE DE CALCIUM POUR OBTENIR L'EXPANSION DE LAITIERS DE PRODUCTION D'ACIER

(30) Priority: 18.10.1999 NO 995072
(43) Date of publication of application: 14.08.2002
(73) Proprietor: NORSK HYDRO ASA, 0240 Oslo (NO)
(72) Inventor: TUVNES, Petter, N-3960 Stathelle (NO); ENGH, Thorvald, Abel, N-7027 Trondheim (NO)
(74) Representative: Wallace, Sheila Jane
(86) International application number: NO0000345
(87) International publication number: WO01029271

(56) References cited:
- EP-A1- 0 829 545
- FR-A1- 2 634 787
- US-A- 5 395 420
- DATABASE WPI Week 199616, Derwent Publications Ltd., London, GB; AN 1996-157404, XP002940119 & JP 8 041 521 A (NIPPON STEEL CORP) 13 February 1996 & PATENT ABSTRACTS OF JAPAN & JP 08 041 521 A (NIPPON STEEL CORP)

## Description

The invention concerns a method of foaming steel-making slags and a use of calcium nitrate as a slag foaming agent in steel-making.

The use of electric arc furnaces, converters and ladles in steelmaking are techniques well-known to those skilled in the steelmaking profession, ref. T. Abel Engh; "Principles of Metal Refining", Oxford Science Publications, ISBN 0-19-856337-X, (1992).

The electric arc process differs from other steelmaking processes in its use of scrap steel as most of the charge. The scrap is added to the furnace at the beginning of the process cycle and melted down by the passage of electric current through the furnace's graphite electrodes. Slag formers are added during melt down, in order to protect the melt from oxidation. A slag is formed on the surface of the charge during the initial melt-down, which remains during the entire process cycle until tapping of the heat. The composition of the slag layer will be dependent on the impurities in the melt and on further additions to the melt. After melting, the steel is transferred to converters and ladles.

In the latest years steel producers have made an effort in obtaining good methods for creation of foaming slags, as these give several process advantages. A foaming slag will give better insulating properties meaning less heat loss from an electric arc furnace. The refracteries and electrodes are protected from arc radiation which means increased lifetime, and the sound is muffled. The electric arc is stabilised and it is possible to increase the power input, giving increased productivity. Different slag foaming methods and agents are thus described in the literature.

From US patent No. 4 528 035 it is known a method of foaming the slag generated in a steel making electric arc furnace after melt-down of steel raw material by introducing a foaming agent comprising essentially of calcium oxide (CaO) and free carbon (C) particles when the amount of said slag atop said melted steel is at least 4 inches deep.

US patent No. 4 447 265 describes a slag-foaming composition and process for use in electric arc furnace steel-making. The compositions comprise from about 15 to 80 wt % of a carbon source, the remainder consisting substantially of a source of an oxide of calcium; alternatively, the compositions comprise from about 15 to 30 wt % of a carbon source, the remainder consisting substantially of dolomite lime.The process consists of the addition, in the course of steelmaking using an electric arc furnace, of the steelmaking additive compositions of the invention to the charge subsequent to the initial scrap steel melt down.

From FR 2 634 787 it is known a method for the production of a foaming slag by blowing oxygen close to the metal-slag interface and by the addition into the slag of a carbonised material previously mixed with a carbonate material such as limestone or dolomite.

From JP08041521 it is known that foaming of a slag in a ladle can be achieved by adding lime nitrogen having C source (CaCN) from above the melt thereby causing the slag volume to increase in such a way that deslagging of the ladle is more efficient.

Stainless steel slags are difficult to foam and it has only recently been able to develop reliable methods for creating foaming slags in the arc furnace. Such a method is described in Masucci,P., Capodilupo, D., Brascugli, G. (1993), "Foaming slags for stainless steel smelting in the electric arc furnace," Electric Furnace Proceedings, pp 289-24. Limestone, CaCO₃, and coke have been added to give foaming. Special ovules have been used to promote a closer contact between limestone and coke. These are composed of a mix of limestone and metallurgical coke (with a C content of 87 %) with grains measuring 0.5 to 1 mm and bound with starch. The ratio of graphite and limestone is 50/50. Slag foaming was achieved by blowing large quantities of oxygen and adding the limestone-coke ovules.

For current slag foaming processes for stainless steel-making, the composition range of the slag has to be very narrow in order to achieve proper foaming. Another disadvantage is that an unacceptable amount of the alloying element Cr is oxidised to Cr₂O₃ and lost in the slag, ref. M. Görnerup, Doctoral Thesis "Studies of Slag Metallurgy in stainless Steelmaking", ISBN 91-7170-205-9 (1997).

The object of the invention is to find other efficient foaming agents and especially agents that produce foam in stainless steel slags. Another object is to avoid the disadvantages with earlier known agents.

These and other objects of the invention are obtained by the process as defined in the patent claims.

The invention thus concerns a method of foaming steel-making slags, wherein calcium nitrate is added to the slag together with carbon. Calcium nitrate and carbon can be fed into the slag, with injection gases such as air, carbon dioxide or inert gases. The solid components can be injected separately or with the same lance or injected as pre-fused granules. For ladle slag foaming calcium nitrate and carbon is added from above the melt. It is preferred to use a ratio between calcium nitrate and carbon in the range from 4:1 to 2:1. For foaming of stainless steel slag, it is preferred to add FeSi, Al or Mg before calcium nitrate and carbon is added or injected into the slag by an injection gas. Air, carbon dioxide or inert gases can be used as injection gases. The invention also concerns the use of calcium nitrate as a foaming agent for steel-making slags. The invention can be used for slag foaming in electric arc furnaces and ladles.

We have found that calcium nitrate is an efficient foaming agent for steel-making slags, especially for stainless steel.

Bubbles are formed when a gas is introduced into a slag. Bubbles on top of the foam rupture and decay. At steady state the liquid carried upwards as a thin film separating the bubbles is balanced by the downward flow of liquid released by the top rupturing process. For a given slag the height of the foam increases with the gas flow rate. If the gas flow stops, the films become thinner as they drain. Then the bubbles rupture when a critical film thickness is reached.

### Foaming of low alloy steel slags

For low alloy steel-making slags, foam today is produced by two main routes that both require that carbon and oxygen react to CO:
a) Injected oxygen in the steels reacts with iron oxide that ends up in the slag. In the following step the iron oxide is reduced by injected carbon and CO gas is formed. Carbon dissolved in the steel may also contribute to gas production.
b) Carbon (injected in the slag or dissolved in the steel) and injected oxygen react directly to give CO.

Doubtless, other gases than CO can give foaming. Thus, calcium nitrate together with carbon at steel-making temperatures reacts as follows:

Ca(NO₃)₂(H₂O)₂ + 5C = CaO + N₂ + 2H₂O + 5CO

Due to the high partial pressure of oxygen and the presence of iron and CaO, a Fe₂O₃-CaO slag is formed.

Use of calcium nitrate as an agent for producing a foaming slag in the electric arc will serve the triple objective of adding lime to increase the basicity of the slag (for removal of P and S), supplying gaseous components N₂ and H₂O to promote foaming and O₂ for the reaction with the injected carbon, giving CO which also promotes foaming. The calcium nitrate, mixed with carbon, could be added through chutes or injected by a gas or air into the slag through a lance. The calcium nitrate may be used with or without various amounts of crystal water Ca(NO₃)₂(H₂O)ₓ (where x = 0-3). Various small amounts of other elements may also be present, e.g. ammonium etc.

Calcium nitrate is particularly interesting in cases where nitrogen in steel is beneficial as in austenitic stainless steel, where it improves pitting resistance and strength. Also in some unalloyed/low alloyed steels, nitrogen will increase strength and hardenability.

### Foaming of stainless steel slag

Normally a stainless steel contains 12-30 % Cr and other elements of which Ni and Mo are the most important. The necessity of removing carbon to low levels in the presence of chromium determines the special character of stainless steel-making.

The most common route for stainless steel-making today is to melt low alloy or stainless scrap, and ferro-alloys in an electric arc furnace. The decarburization, recovery of Cr from the top-slag by reduction, sulphur removal and adjustment of the steel composition is carried out in a converter.

For stainless steels one has only recently been able to develop reliable methods for creating a proper foaming slag in arc furnaces. The reason seems to be some subtle effects caused by the Cr₂O₃ content of the slag. The Cr₂O₃ has a low solubility in electric arc furnace slags and some of it remains as a solid second phase. This chromium oxide reacts very slowly with carbon to give CO and to recover the Cr.

Since Cr₂O₃ is unwanted in a foaming slag, it is suggested that CO-foaming in stainless steel slag is generated involving the metal phase as little as possible. First, FeSi or Al or Mg should be added to prevent the oxidation of Cr and to reduce the Cr₂O₃-content in the slag, and thereafter calcium nitrate and carbon should be injected carefully into the slag. The solid components are injected separately or with the same lance, or injected as pre-fused granules.

### The invention will be illustrated by the following examples:

The technical grade calcium nitrate available on the market (for example Nitcal® from Norsk Hydro ASA) has a chemical composition close to Ca(NO₃)₂(NH₄NO₃)_{0.2}(H₂O)₂ and has the form of granules with a diameter of about 2 - 4 mm. If mixed with a carbon source, this source should have the form of a powder. The mixing ratio of calcium nitrate to carbon should be in the range from 4:1 to 2:1.

Various processes are possible:
1) Addition of calcium nitrate alone or injection by gas (inert gas, air or CO₂) that will stir the slag. Calcium nitrate will mainly decompose to CaO slag and O₂, N₂, H₂O gases:

   Ca(NO₃)₂(H₂O)₂ = CaO + N₂ + 2H₂O + 5/2O₂,

   i.e. 5.5 mol gases
   1 kg calcium nitrate ( ca. 5 mol) may give about 27.5 mol gases = 0.616 Nm³ of gases.
2) Injection of calcium nitrate + C by CO₂ will give CaO slag and N₂, H₂O, CO gases:

   Ca(NO₃)₂(H₂O)₂ + 8C + CO₂ = CaO + N₂ + 2H₂O + 7CO,

   i.e. 10 mol gases. 1 kg calcium nitrate + 0.48 kg C + 0.22 kg CO₂ => 50 mol gases = 1.1 Nm³ gases.
3) Injection of calcium nitrate + C by air will give CaO slag and N₂, H₂O, CO gases:

   Ca(NO₃)₂(H₂O)₂ + 9C + air(O₂+4N₂) => CaO + 4N₂ + 2H₂O + 9CO,

   i.e. 15 mol gases. 1 kg calcium nitrate + 0.54 kg C + 0.72 kg air => ca. 75 mol gases = 1.7 Nm³ gases.
4) Injection of calcium nitrate + C by nitrogen or inert gas will give CaO slag and N₂, H₂O, CO gases:

   Ca(NO₃)₂(H₂O)₂ + 5C = CaO + N₂ + 2H₂O + 5CO,

   i.e. 8 mol gases. 1 kg calcium nitrate + 0.3 kg C => ca. 40 mol gases = 0.9 Nm³ gases. Ca. 0.05 kg (0.04 Nm³) nitrogen per kg calcium nitrate is necessary as injection gas.

### Example

Demonstration tests have been carried out. About 1.5 kg of stainless steel type AISI 302 was melted in a crucible by a gas flame. After melting, about 0.3 kg calcium nitrate, Nitcal ®, was poured on top of the melt. The high temperature of the melt and crucible caused the calcium nitrate to melt, decompose and react by evolving gases which bubbled out of the molten calcium nitrate and created a foam. The decomposition periode took about 2 minutes after the calcium nitrate had been added, and converted the calcium nitrate to a foamy substance with about 2-3 times volume increase.

Full scale testing of Nitcal® in an EAF with the purpose to observe the behaviour and foaming potential of Nitcal® has been conducted. Up to 300 kg Nitcal® per melt (3,5 kg Nitcal/ton steel) was injected by air into the melt simultaneously with separate carbon injection. No dramatic reactions occurred despite the crystal water content in Nitcal®. The tests showed that Nitcal® is easy to handle and inject into the melt of an EAF by simple and standard injection equipment. Gas evolution and reaction with C was observed. Injection by air will give oxidising conditions that will increase the level of Cr₂O₃ in the slag. Injection of Nitcal® together with C in such a way that the oxygen in Nitcal® reacts with C to CO does not increase the NOx level from the EAF. The result of the tests in the EAF showed that Nitcal® should be injected into the melt by nitrogen together with sufficient amount of carbon (1 kg Nitcal® requires 0,3 kg C) in order to achieve reducing conditions and reduced loss of Cr to the slag.

The total foam hight that is wanted, may be achieved by adding various amounts of calcium nitrate. Compared to current practice, about 10 kg of calcium nitrate per ton steel charge must be added in order to achieve the same amount of gas evolution as typical for current practices.

## Claims

1. Method of foaming steel-making slags, wherein calcium nitrate is added to the slag alone or together with carbon.

2. Method according to claim 1, wherein calcium nitrate alone or mixed with carbon is injected into the slag with an injection gas.

3. Method according to claim 2, wherein the injection gas is selected from air, nitrogen, carbon dioxide and inert gases.

4. Method according to claim 2 or claim 3, wherein the solid components are injected separately.

5. Method according to claim 2 or claim 3, wherein the solid components are injected with the same lance.

6. Method according to claim 2 or claim 3, wherein the solid components are injected as pre-fused granules.

7. Method according to claim 1, wherein calcium nitrate alone or mixed with carbon is added from above the melt.

8. Method according to any one of the preceding claims, wherein the ratio of calcium nitrate to carbon is in the range from 4:1 to 2:1.

9. Method according to any one of the preceding claims, wherein the steel is stainless steel and FeSi, Al or Mg is added before calcium nitrate and carbon is added or injected into the slag by an injection gas.

10. Use of calcium nitrate as a foaming agent for steel-making slags.

## Patentansprüche

1. Verfahren zum Schäumen von Stahlherstellungsschlacken, worin Calciumnitrat der Schlacke allein oder zusammen mit Kohlenstoff zugefügt wird.

2. Verfahren nach Anspruch 1, worin Calciumnitrat allein oder gemischt mit Kohlenstoff mit einem Injektionsgas in die Schlacke injiziert wird.

3. Verfahren nach Anspruch 2, worin das Injektionsgas aus Luft, Stickstoff, Kohlendioxid und Inertgasen ausgewählt ist.

4. Verfahren nach Anspruch 2 oder 3, worin die Feststoffkomponenten getrennt injiziert werden.

5. Verfahren nach Anspruch 2 oder 3, worin die Feststoffkomponenten mit der gleichen Lanze injiziert werden.

6. Verfahren nach Anspruch 2 oder 3, worin die Feststoffkomponenten als vorgeschmolzene Granalien injiziert werden.

7. Verfahren nach Anspruch 1, worin Calciumnitrat allein oder gemischt mit Kohlenstoff der Schmelze von oben zugefügt wird.

8. Verfahren nach einem der vorangehenden Ansprüche, worin das Verhältnis von Calciumnitrat zu Kohlenstoff im Bereich von 4 : 1 bis 2 : 1 liegt.

9. Verfahren nach einem der vorangehenden Ansprüche, worin der Stahl Edelstahl ist und FeSi, Al oder Mg zugefügt wird, bevor der Schlacke Calciumnitrat und Kohlenstoff zugefügt oder mittels eines Injektionsgases in sie injiziert werden.

10. Verwendung von Calciumnitrat als ein Schäumungsmittel für Stahlherstellungsschlacken.

## Revendications

1. Procédé de moussage de laitiers pour l'élaboration d'aciers, selon lequel du nitrate de calcium est ajouté au laitier, seul ou avec du carbone.

2. Procédé selon la revendication 1, selon lequel le nitrate de calcium, seul ou mélangé avec du carbone, est injecté dans le laitier avec un gaz d'injection.

3. Procédé selon la revendication 2, selon lequel le gaz d'injection est sélectionné parmi l'air, l'azote, l'anhydride carbonique et les gaz inertes.

4. Procédé selon la revendication 2 ou la revendication 3, selon lequel les composants solides sont injectés séparément.

5. Procédé selon la revendication 2 ou la revendication 3, selon lequel les composants solides sont injectés avec la même lance.

6. Procédé selon la revendication 2 ou la revendication 3, selon lequel les composants solides sont injectés sous forme de granulés fondus au préalable.

7. Procédé selon la revendication 1, selon lequel le nitrate de calcium, seul ou mélangé avec du carbone, est ajouté à partir du dessus du bain de fusion.

8. Procédé selon l'une quelconque des revendications précédentes, selon lequel le rapport nitrate de calcium/carbone est compris dans la plage de 4:1 à 2:1.

9. Procédé selon l'une quelconque des revendications précédentes, selon lequel l'acier est de l'acier inoxydable et FeSi, Al ou Mg est ajouté avant que le nitrate de calcium et le carbone ne soient ajoutés ou injectés dans le laitier par un gaz d'injection.

10. Utilisation du nitrate de calcium comme agent moussant pour les laitiers pour l'élaboration d'aciers.
